# EUROPÄISCHE PATENTANMELDUNG

(11) **EP 1 518 748 A2**
(43) Veröffentlichungstag der Anmeldung: **30.03.2005**
(21) Anmeldenummer: 04017814.7
(22) Anmeldetag: 28.07.2004
(51) Int. Cl.: B60N 2/44, A47C 7/46

(54) **Vorrichtung und Verfahren zur Steuerung und/oder Regelung eines Druckniveaus**

(30) Priorität: 25.09.2003 DE 10344587
(71) Anmelder: ROBERT BOSCH GMBH, 70442 Stuttgart (DE)
(72) Erfinder: Kimmig, Daniel, 77767 Nesselried (DE)

(57) **Zusammenfassung**

Die Erfindung betrifft eine Vorrichtung zur Steuer- und/oder Regelung des Druckniveaus mindestens eines volumenvariablen Rezipienten (10, 12) eines pneumatischen Systems, insbesondere eines pneumatischen Systems für einen Kraftfahrzeugsitz (14).

Erfindungsgemäß wird vorgeschlagen, das Mittel (24,26) vorgesehen sind, die es ermöglichen, den Druck in dem Rezipienten (10, 12) reversibel zu erhöhen oder zu reduzieren.

Ferner betrifft die Erfindung ein Verfahren zur Steuer- und/oder Regelung des Druckniveaus mindestens eines volumenvariablen Rezipienten (10, 12) eines pneumatischen Systems, insbesondere eines pneumatischen Systems für einen Kraftfahrzeugsitz (14).

Erfindungsgemäß variiert das Verfahren das Druckniveau in dem Rezipienten (10, 12) durch Volumenänderungen in einem dem Rezipienten zugeordneten Volumenstellelement (24,26).

## Beschreibung

### Stand der Technik

Die Erfindung geht aus von einer Vorrichtung zur Steuer- und/oder Regelung des Druckniveaus mindestens eines volumenvariablen Rezipienten eines pneumatischen Systems, insbesondere eines pneumatischen Systems für einen Sitz eines Kraftfahrzeuges. Des weiteren betrifft die Erfindung ein Verfahren zur Steuer- und/oder Regelung des Druckniveaus eines solchen Systems.

Pneumatische Steuer- und/oder Regelschaltungen werden in einer Vielzahl von technischen Anwendungen benutzt. So werden beispielsweise solche Systeme im Bereich der Kraftfahrzeugtechnik genutzt, um den Sitzkomfort von Fahrzeuginsassen zu erhöhen. Dazu sind volumenvariable Rezipienten, wie beispielsweise Luftkissen oder Blasen, vorzugsweise aus Kunststoff in den Fahrzeugsitz eingelassen, die über eine entsprechende Vorrichtung mit einem Arbeitsfluid beaufschlagt werden können, um somit den Fahrzeugsitz hinsichtlich Härte und Form an die individuellen Wünsche seines Besitzers anzupassen.

Aus der US 4,655,505 ist beispielsweise ein pneumatisch kontrollierter Sitz für ein Kraftfahrzeug bekannt, der es ermöglicht die Druckverteilung im Sitz für den Fahrer zu variieren. Diese Vorrichtung umfasst eine Vielzahl von in den Sitz des Fahrzeuges integrierten, flexiblen, d. h. volumenvariablen Luftkammern, die über eine entsprechende Anzahl von Verbindungsmitteln mit einer Luftpumpe und einem Drucksensor verbunden sind. Jedes Verbindungsmittel weist ein Ventil auf, welches über elektronische Kontrollmittel, die das Signal des Drucksensors auswerten, angesteuert werden kann.

Die kombinierte, pneumatische und elektrische Schaltung dieser Vorrichtung gestattet es, durch die Vielzahl der Ventile, definierte Drücke in den einzelnen Luftkammern des Sitzes aufzubauen. Auf diese Weise ist es möglich sowohl den Komfort des Sitzes zu erhöhen, als auch longitudinale oder laterale Beschleunigungen des Fahrzeuges abzufangen.

Im besonderen gestattet es die Vorrichtung der US 4,655,505 den Druck in jeder einzelnen Luftkammer durch Öffnen und Schließen der Steuerventile zeitlich kontinuierlich zu variieren, so dass eine optimierte Druckverteilung einstellbar ist. So ist es beispielsweise auch möglich, durch eine oszillierende Änderung der Druckverhältnisse in den Luftkammern des Sitzes einen Massage-Effekt zu erzeugen.

Zur Erzielung der gewünschten Druckverhältnisse bzw. der gewünschten Variation in den Druckverhältnissen der einzelnen Luftkammern des Sitzes ist in dem System der US 4,655,505 eine aufwendige elektronische Kontroll- und Steuereinheit mit entsprechender Elektronik und zumindest einem Drucksensor und einer zentralen Recheneinheit von Nöten.

Aus der DE 35 05 088 C1 ist ein Kraftwagensitz mit in der Polsterung eingelassenen aufblasbaren Kissen bekannt. Bei dem System der DE 35 05 088 C1 wird von einer Pumpe erzeugte Druckluft in eine Leitung eingespeist, in die ein Druckvolumenspeicher eingefügt ist. Der von der Pumpe erzeugte und über die Leitung dem Vorratsspeicher zugeführte Druck liegt eingangsseitig an einer Druckregulierungseinrichtung an, während ausgangsseitig die Luftkissen über zugeordnete Magnetventile entlüftet, und somit der Druck in den Kissen reduziert werden kann. Die Druckluft wird sodann einem Magnetventil zugeführt, das einen Bestandteil einer Druckregulierungseinrichtung darstellt. Durch eine Regeldruck-Rückführung erfolgt eine Druckeinregulierung, wobei dieser Druck eingangsseitig an vier Magnetventilen anliegt. Die Magnetventile werden von einer Verteileinrichtung aus angesteuert, die einen Schieber aufweist. In einer ersten Stellung des Schiebers wird das Magnetventil derart angesteuert, dass die Seitenkissen sowie ein Kissen im Bereich der Kopfstütze gefüllt wird. Abhängig von der Stellung des Schiebers können zusätzlich Luftkissen im Bereich der Rückenlehnen gefüllt werden. Über die vier Magnetventile können die einzelnen Luftkissen im Fahrzeugsitz der DE 35 05 088 C1 gegen die Atmosphäre entlüftet werden.

### Vorteile der Erfindung

Die erfindungsgemäße Vorrichtung mit den Merkmalen des Anspruchs 1 bzw. das erfindungsgemäße Verfahren nach Anspruch 11 hat gegenüber den Systemen des Standes der Technik den Vorteil, dass eine Steuer- und/oder Regelung des Druckniveaus ohne Verluste des Arbeitsfluids möglich ist. Bei den Systemen des Standes der Technik befüllt eine Pumpe ein als Arbeitsspeicher dienenden Volumen. An dieses Volumen ist das Sitzsystem derart pneumatisch angebunden, dass eine Befüllung der Luftkissen des Sitzes durch das im Zwischenspeicher vorhandene Volumen eines Arbeitsfluids erfolgt. Dabei findet eine Drucküberwachung der Luftkissen über Drucksensoren statt. Beim Entlüften der Luftkissen des Sitzes wird die Luft abgeblasen, d. h. gegen die Atmosphäre freigegeben. Aus diesem Grunde muss dem System immer wieder Luft nachgeführt werden. Dies erfordert unter anderem auch eine leistungsstarke und damit sowohl große als auch kostenaufwendige Pumpe für das Arbeitsfluid.

Bei dem erfindungsgemäßen System treten im dynamischen Betrieb in vorteilhafter Weise keinerlei Verluste des Arbeitsfluids auf. Durch die erfindungsgemäßen Mittel ist es möglich, das mit den Rezipienten verbundene Volumen zu variieren und somit, da es sich um ein geschlossenes System handelt, den Druck in den Rezipienten selbst zu steuern.

Da beim vorgeschlagenen System keine Verluste des Arbeitsfluids auftreten, kann die Pumpe des Systems in ihrer Baugröße wesentlich eingeschränkt werden. Darüber hinaus kann in vorteilhafter Weise auf einen Druckspeicher verzichtet werden, so dass das Einbauvolumen der erfindungsgemäßen Vorrichtung deutlich reduziert ist. Es ergibt sich somit ein komplett autarkes System mit einer hohen Kosteneinsparung. Ein solches System lässt sich in vorteilhafter Weise beispielsweise direkt in eine Fahrzeugsitz einbauen.

Durch die in den abhängigen Ansprüchen aufgeführten Maßnahmen sind vorteilhafte Weiterbildungen und Verbesserungen der in den unabhängigen Ansprüchen angegebenen Vorrichtung bzw. des erfindungsgemäßen Verfahrens möglich.

Bei dem erfindungsgemäßen Verfahren wird das Druckniveau in den Rezipienten, die beispielsweise in einem Fahrzeugsitz integriert sind, durch Volumenänderungen in einem dem Rezipienten zugeordneten Volumenstellelement variiert. Auf diese Weise ist es möglich, in einem im wesentlichen geschlossenen System, die gewünschten Druckänderungen in den Rezipienten zu erzeugen. Die Verwendung eines relativ großen Speichervolumens zur Erneuerung des Arbeitsfluids, welches bei den Systemen des Standes der Technik bei Druckreduzierung im System gegen die Atmosphäre abgelassen wird, ist mit dem erfindungsgemäßen System nicht notwendig. Dies ermöglicht eine deutliche Reduzierung der Einbaugröße des erfindungsgemäßen Systems.

Zur reversiblen Druckerhöhung bzw. Reduzierung in den Rezipienten der erfindungsgemäßen Vorrichtung ist mindestens ein aktives Volumenstellelement vorgesehen, welches es ermöglicht, das mit dem Arbeitsfluid beaufschlagte Volumen der erfindungsgemäßen Vorrichtung zu variieren. Da die Menge des Arbeitsfluids im System im wesentlichen Konstant gehalten wird, führt eine Vergrößerung des mit dem Arbeitsfluid beaufschlagten Volumen zu einer Druckreduzierung in den Rezipienten des Systems. Wird im umgekehrten Fall, das mit dem Arbeitsfluid beaufschlagte Volumen durch das aktive Volumenstellelement reduziert, so führt dies zu einer Druckerhöhung im System und somit in den Rezipienten.

In vorteilhafter Weise kann die erfindungsgemäße Vorrichtung eine Pumpe für das Arbeitsfluid beispielsweise eine Bidruckpumpe aufweisen, die es ermöglicht einen statischen Vordruck in das System einzuspeisen. Dieser statische Vordruck in den Rezipienten, die beispielsweise in Form von volumenvariablen Luftkammern aus einem Kunststoff ausgebildet sein können, kann vom Anwender des Systems über einen Bedienschalter voreingestellt werden. Dazu werden die aktiven Volumenstellelemente in eine Nullstellung ihres Regelbereiches verfahren und anschließend Arbeitsfluid in die Luftkissen gepumpt, bis der gewünschte statische Druck erreicht ist. Da alle anschließenden Druckänderungen durch Volumenänderung der aktiven Volumenstellelemente erzeugt werden, gibt es in der Regel keine Verluste des Arbeitsfluids im System. D. h., bei einer aktiven dynamischen Funktion (Variation des Drucks in den Rezipienten) muss die Pumpe nunmehr den Rezipienten kein Arbeitsmittel zuführen. Dies ermöglicht die Verwendung einer deutlich kleineren Pumpe, so dass diese beispielsweise auch in vorteilhafter Weise in einen Fahrzeugsitz direkt eingebaut werden kann. Dies hat den zusätzlichen Vorteil, dass die Anbindung vom Fahrzeugsitz zum Fahrzeug sich lediglich auf die Spannungsversorgung und eventuelle Kommunikationsleitungen für das pneumatische System beschränkt.

In vorteilhafter Weise wird das mit dem Arbeitsfluid beaufschlagte Volumen der aktiven Volumenstellelemente durch ein Stellelement eingeregelt, welches mit einem Motor, insbesondere einem Elektromotor verbunden ist. Auf diese Weise ist es möglich, das mit dem Arbeitsfluid beaufschlagte Volumen der Volumenstellelemente und somit den Druck in den entsprechenden, zugeordneten Rezipienten nach vorgebbaren Signalen einzustellen.

In vorteilhafter Weise ermöglicht das erfindungsgemäße System die Detektion der in den Rezipienten anliegenden Druckverhältnisse durch eine Messung der Stellung der Stellelemente der Volumenstellelemente. Da die aktiven Volumenstellelemente ein definiertes Volumen besitzen, und dieses Volumen durch ein motorgetriebenes Stellelement variiert wird, kann aus der Änderung der Position der Stellelemente auf eine Änderung des mit dem Arbeitsfluid beaufschlagten Volumens der Volumenstellelemente geschlossen werden. Auf diese Weise ist es möglich, den Druck in den zugehörigen Rezipienten auch ohne einen Drucksensor zu bestimmen. Die üblicher Weise verwendeten Drucksensoren zur Überwachung der Drücke in den Luftkammern des pneumatischen Systems können somit entfallen, was zu einer deutlichen Kosteneinsparung führt, da Drucksensoren sehr teuer und ihre Anbindung an das System sehr aufwendig ist.

In vorteilhafter Weise ist der die Stellelemente antreibende Motor ein Motor mit Drehrichtungsumkehr, der es in einfacher Weise ermöglicht, das von einem Arbeitsfluid beaufschlagte Volumen der Volumenstellelemente sowohl zu vergrößern, als auch zu verkleinern.

In einer Ausführungsform der erfindungsgemäßen Vorrichtung kann mindestens ein Sensorelement vorgesehen sein, welches Informationen über die Sitzbelegung der Fahrzeugsitze gewinnt und diese Informationen an ein Steuergerät der Vorrichtung übermittelt. Auf diese Weise ist es möglich, lediglich die Sitze zu aktivieren, die in der jeweiligen Situation in Benutzung sind.

Mit der erfindungsgemäßen Vorrichtung lässt sich ein Sitz, insbesondere ein Sitz für ein Kraftfahrzeug realisieren, der alle Vorteile der dynamischen Druckregelung aufweist, für dieses Steuer- und Regelsystem jedoch ein deutlich reduziertes Einbauvolumen benötigt und eine deutliche Kosteneinsparung mit sich bringt.

Bei dem erfindungsgemäßen Verfahren zur Steuer- und/oder Regelung des Druckniveaus mindestens eines volumenvariablen Rezipienten eines pneumatischen Systems wird das Druckniveau in dem Rezipienten durch Volumenänderung in einem dem Rezipienten zugeordneten Volumenstellelement variiert. Auf diese Weise ist ein nahezu geschlossenes Volumen- bzw. Druckregelungssystem möglich. In vorteilhafter Weise ermöglicht das erfindungsgemäße Verfahren die Detektion des in den Rezipienten anliegenden Druckniveaus ohne einen kostspieligen Drucksensor. Über den relativen Stellweg des das Stellelement des Volumenstellelementes stellenden Motors kann das Druckniveau bzw. Änderungen im Druckniveau der Rezipienten in einfacher Weise detektiert werden.

Weitere Vorteile der erfindungsgemäßen Vorrichtung bzw. des erfindungsgemäßen Verfahrens ergeben sich aus der nachfolgenden Beschreibung eines Ausführungsbeispiels.

### Zeichnung

In der Zeichnung ist ein Ausführungsbeispiel der erfindungsgemäßen Vorrichtung dargestellt, das in der nachfolgenden Beschreibung näher erläutert werden soll. Die Figur der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen, die somit als ebenfalls in diesem Text offenbart anzusehen sind.

### Es zeigt

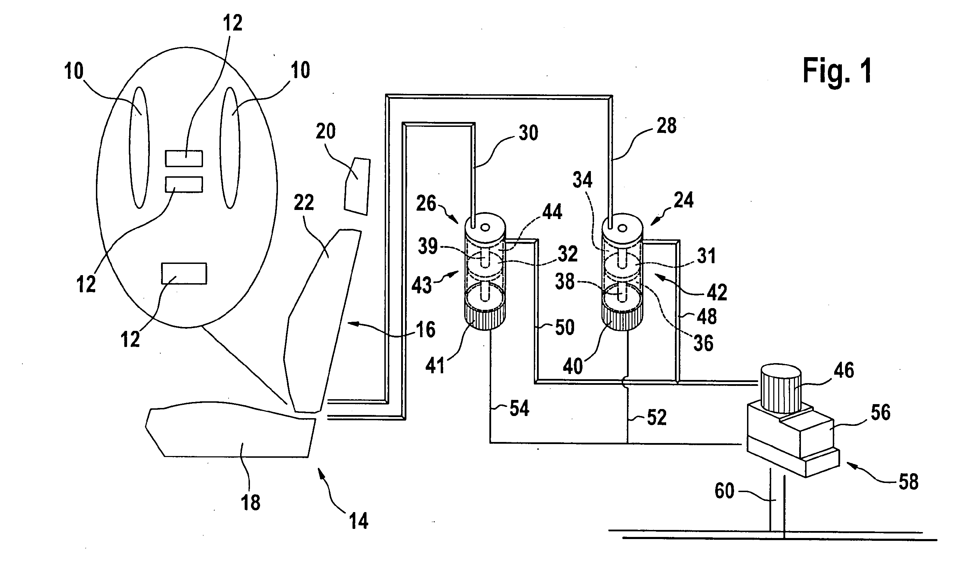

- Fig. 1: ein Ausführungsbeispiel der erfindungsgemäßen Vorrichtung zur Steuer- und/oder Regelung des Druckniveaus mindestens eines volumenvariablen Rezipienten in einer schematischen Übersichtsdarstellung.

### Beschreibung des Ausführungsbeispiels

Die einzige Figur der Beschreibung zeigt ein Ausführungsbeispiel der erfindungsgemäßen Vorrichtung zur Steuer- und/oder Regelung des Druckniveaus mindestens eines volumenvariablen Rezipienten. Im Fall des dargestellten Ausführungsbeispiels sind eine Mehrzahl von Rezipienten in Form von aufblasbaren Luftkissen 10 bzw. 12 in einen Sitz 14, der im dargestellten Ausführungsbeispiel der Sitz eines Kraftfahrzeuges ist, integriert. Zur Vereinfachung der Darstellung sind die Rezipienten neben dem eigentlichen Sitz gezeichnet und lediglich in zwei Gruppen 10 bzw. 12 eingeteilt, deren Druckniveau getrennt voneinander gesteuert bzw. geregelt wird. Bei dem realen System sind die Rezipienten bzw. Luftkammern nbatürlich in den Sitz integriert. Andere, als das dargestellte Ausführungsbeispiele der erfindungsgemäßen Vorrichtung können selbstverständlich sowohl eine andere Anzahl von Rezipienten, als auch eine andere Anzahl von Steuereinrichtungen umfassen, ohne den Erfindungsgedanken zu verlassen.

Die Luftkissen 10 sind im Bereich der Seitenabstützung 22 der Rückenlehne 16 des Fahrzeugsitzes 14 integriert, während die Luftkissen 12 im Rückenbereich der Rückenlehne 16 im Innern des Fahrzeugsitzes angebracht sind. Weitere Luftkissen könnten beispielsweise im Sitzbereich 18 bzw. im Bereich der Kopfstütze 20 des Sitzes vorhanden sein.

Durch Variation des Drucks in den Luftkissen 10 bzw. 12 kann die Härte und somit der Komfort des Sitzes 14 den individuellen Ansprüchen seines Besitzers angepasst werden. Darüber hinaus ist es beispielsweise auch möglich, durch Erhöhung des Drucks in einem bzw. beiden Seitenbereichen 22 der Rückenlehne 16 einer Querbeschleunigung des Fahrzeuges durch eine erhöhte Abstützung des Fahrzeuginsassen entgegen zu wirken, wie dies beispielsweise aus der DE 197 50 223 C2 bekannt ist. Die erfindungsgemäße Vorrichtung ermöglicht somit sowohl eine statische Anpassung der Form und der Härte des Sitzes auf seinen Besitzer als auch eine fahrdynamische d. h. sich der Fahrsituation anpassende Ein- und Nachstellung der Sitzkontur.

Zur Beaufschlagung der im Sitz 14 integrierten Luftkissen 10 bzw. 12 mit einem Arbeitsfluid, welches beispielsweise Luft sein kann, sind die Luftkissen jeweils mit einem der Gruppen 10 bzw. 12 zugeordneten Volumenstellelement 24 bzw. 26 über Verbindungsleitungen 28 bzw. 30 verbunden. Das Volumenstellelement 24 weist beispielsweise ein Volumen auf, welches durch einen verschieblichen Teller 31 in zwei Teilvolumina 34 bzw. 36 getrennt ist. Der verschiebliche Teller 31 wird über eine Spindel 38, die von einem Elektromotor 40 angetrieben ist, gestellt. Der Elektromotor, die Spindel sowie der auf der Spindel verschiebbare Teller 32 sind Teile eines Stellelementes 42 des Volumenstellelementes 24.

Das erste Teilvolumen 34 des Volumenstellelements 24 ist mit dem Arbeitsfluid beaufschlagt. Wird dieses Teilvolumen 34 durch entsprechendes Verfahren des Tellers 31 reduziert, so erhöht sich der Druck in dem geschlossenen pneumatischen System, welches aus dem Teilvolumen 34, der Verbindungsleitung 28 sowie den Luftkissen 12 gebildet wird. Auf diese Weise ist es möglich, den Druck in den Luftkissen und somit im Sitz 14 durch das aktive Volumenstellelement 24 zu steuern bzw. einzuregeln.

Das Volumenstellelement 26, die Verbindungsmittel 30 sowie die zugehörigen Luftkissen 10 bilden ebenfalls ein für sich geschlossenes pneumatisches System, dessen Druck durch Reduzierung des mit dem Arbeitsfluid beaufschlagten Teilvolumens 44 des Volumenstellelementes 26 erhöht bzw. durch eine Vergrößerung des Teilvolumens 44 entsprechend reduziert werden kann. Der Motor 41, die Spindel 39 und der durch die Spindel 39 getriebene Teller 32 sind Bestandteil eines Verstellelementes 43 des Volumenstellelementes 26. Ansonsten entspricht der Aufbau des Volumenstellelementes 26 dem Aufbau des Elementes 24.

Um die Ansprechzeit der Druckänderungen in den Luftkammern des Sitzes möglichst gering zu halten, weist das pneumatische System einen statischen Vordruck - oder auch mehrere verschiedene statische Vordrücke - auf. Dazu werden die Teller 31 und 32 der beiden Volumenstellelemente 24 bzw. 26 über die Elektromotoren 40 bzw. 41 in eine definierte Nullstellung gefahren. Über eine kleine Förderpumpe, beispielsweise eine Bidruckpumpe 46 wird eine entsprechende Menge an Arbeitsfluid über Verbindungsleitungen 48 bzw. 50, die Teilvolumen 34 bzw. 44 und die Verbindungsleitungen 28 bzw. 30 den Luftkissen 12 bzw. 10 zugeführt bis die gewünschte statische Einstellung des Druckniveaus erreicht ist. Diese Einstellung des statischen Vordrucks in den Luftkissen des Sitzes kann beispielsweise vom Anwender über einen Bedienschalter eingestellt werden bzw. auch werksseitig bereits vorgenommen sein.

Über die Motoren 40 bzw. 41 kann der Druck in den Luftkammern 12 bzw. 10 mit entsprechend kurzer Ansprechzeit dynamisch verstellt werden, indem die Teller 31 bzw. 32 derart verfahren werden, dass die Teilvolumina 34 bzw. 44 vergrößert bzw. verkleinert werden. In vorteilhafter Weise bieten sich hier Elektromotoren an, die eine Drehrichtungsumkehr ihrer Laufrichtung und somit der den jeweiligen Teller antreibenden Spindel 38 bzw. 39 ermöglicht. Alternativer Weise lassen sich die Teilvolumina 34 bzw. 44 auch durch Stellmotoren oder eine gleichwertige Stelleinrichtung einstellen.

Da nur die Größen der mit dem Arbeitsfluid beaufschlagten Teilvolumina 34 bzw. 44 der Volumenstellelemente 24 bzw. 26 verändert werden, kommt es zu keinerlei Verlusten des Arbeitsfluids. D. h. bei aktiver dynamischer Funktion der erfindungsgemäßen Vorrichtung muss die Pumpe 46 dem System kein Arbeitsfluid mehr zuführen. Dies ermöglicht in vorteilhafter Weise die Verwendung einer Pumpe mit deutlich reduzierter Baugröße, was wiederum die Möglichkeit eröffnet, die Pumpe auch direkt im Sitz 14 zu verbauen. Auch die in der Figur dargestellten Verbindungsmittel 28, 30 bzw. 48, 50 sowie die Volumenstellelemente 24 bzw. 26 lassen sich aufgrund ihres geringen Bauraumes direkt in den Sitz 14 integrieren und sind in der Figur 1 lediglich der Übersicht halber außerhalb des Sitzes 14 gezeigt. Somit ist die Anbindung eines Fahrzeugsitzes zum Fahrzeug lediglich begrenzt auf eine Spannungsversorgung und eventuelle Kommunikationsleitungen für das pneumatische System. Dies ermöglicht ein nahezu autarkes peumatisches System mit einer deutlichen Reduzierung des Montageaufwandes.

Die Ansteuerung der Motoren 40 bzw. 41 erfolgt über entsprechende Signalleitungen 52 bzw. 54 von einem Steuergerät 56 aus, welches beispielsweise zusammen mit einem Steuergerät für die Pumpe 46 in einer baulichen Einheit 58 angeordnet sein kann. Die Steuergeräte der baulichen Einheit 58 können dann beispielsweise über einen CAN-Bus 60 mit einem zentralen Steuergerät des Fahrzeuges oder weiteren Funktionen des Fahrzeuges in Kommunikation treten.

In vorteilhafter Weise ermöglicht das erfindungsgemäße System zugleich die Detektion der in den Luftkammern 10 bzw. 12 vorliegenden Druckniveaus ohne die aufwenduge Verwendung zusätzlicher Drucksensoren. Über die Wegverstellung der Teller 31 bzw. 32 in den Volumenstellelementen 24 bzw. 26 kann man direkt auf die Druckänderung und damit den Druck in den Luftkammem 10 bzw. 12 schließen. Eine entsprechende Wegverstellung der Teller kann beispielsweise bei einem Schrittmotor leicht detektiert werden. Im Fall des in der Figur gezeigten Ausführungsbeispiels, welches zur Wegverstellung der Teller 31 bzw. 32 Spindeln 38 bzw. 39 benutzt, lässt sich über einen Hallsensor die Drehrate des Motors 40 bzw. 41 und über die Spindelsteigung somit die Wegverstellung der Teller und die damit einhergehenden Volumenänderung in einfacher Weise ermitteln und durch das Steuergerät 56 und den CAN-Bus 60 einer Fahrzeugüberwachung bereitstellen. Gesonderte Drucksensoren zur Überwachung des Druckniveaus in den Luftkammern 10 bzw. 12 können somit entfallen, was zu einer deutlichen Kosteneinsparung beim erfindungsgemäßen System führt.

Die erfindungsgemäße Vorrichtung bzw. das erfindungsgemäße Verfahren zur Steuerund/oder Regelung des Druckniveaus mindestens eines volumenvariablen Rezipienten eines pneumatischen Systems, insbesondere eines pneumatischen Systems für einen Kraftfahrzeugsitz, bei dem das Druckniveau in dem Rezipienten durch Volumenänderungen in einem, dem jeweiligen Rezipienten zugeordneten Volumenstellelement variiert wird, ist nicht auf das in der Zeichnung dargestellte Ausführungsbeispiel beschränkt.

Insbesondere sind Vorrichtung und Verfahren nicht beschränkt auf die Verwendung im Sitz eines Kraftfahrzeuges.

Darüber hinaus ist die Vorrichtung nicht beschränkt auf die Verwendung der im Ausführungsbeispiel dargestellten Anzahl von Luftkissen, Volumenstellelementen oder sonstigen Komponenten des Systems.

## Patentansprüche

1. Vorrichtung zur Steuerung und /oder Regelung des Druckniveaus mindestens eines volumenvariablen Rezipienten (10,12) eines pneumatischen Systems, insbesondere eines pneumatischen Systems für einen Kraftfahrzeugsitz, **dadurch gekennzeichnet**, das Mittel (24, 26) vorgesehen sind, die es ermöglichen, den Druck in dem Rezipienten (10,12) reversibel zu erhöhen oder zu reduzieren.

2. Vorrichtung nach Anspruch 1, **dadurch gekennzeichnet, dass** die Mittel (26,28) mindestens ein aktives Volumenstellelement (24,26) aufweisen, das es ermöglicht, das von einem Arbeitsfluid beaufschlagte Volumen der Vorrichtung zu variieren.

3. Vorrichtung nach Anspruch 2, **dadurch gekennzeichnet, dass** das mindestens eine Volumenstellelement (24,26) einen Motor, insbesondere einen Elektromotor (40,41) aufweist, der ein Stellelement (42,43) antreibt, welches das vom Arbeitsfluid beaufschlagte Volumen (34,44) des Volumenstellelementes (24,26), entsprechend vorgebbaren Signalen einstellt.

4. Vorrichtung nach Anspruch 2 oder 3, **dadurch gekennzeichnet, dass** der Druck in dem Rezipienten (10,12) aus der Stellung der Stellelemente (42,43) der Volumenstellelemente ermittelt (24,26) wird.

5. Vorrichtung nach Anspruch 3 oder 4, **dadurch gekennzeichnet, dass** der Motor (40,41) des Stellelementes (42,43) ein Motor mit Drehrichtungsumkehr ist.

6. Vorrichtung nach einem der Ansprüche 2 bis 5, **dadurch gekennzeichnet, dass** mindestens ein Volumenstellelement (24,26) in einem zugeordneten Fahrzeugsitz (14) angeordnet ist.

7. Vorrichtung nach einem der vorhergehenden Ansprüche **dadurch gekennzeichnet, dass** eine Pumpe (46) vorgesehen ist, die es ermöglicht, einen statischen Vordruck in dem mindestens einen Rezipienten (10,12) einzustellen.

8. Vorrichtung nach Anspruch 7, **dadurch gekennzeichnet, dass** die Pumpe (46) in einem Fahrzeugsitz (14) angeordnet ist.

9. Vorrichtung nach einem der vorhergehenden Ansprüche 1 bis 8, **dadurch gekennzeichnet**, mindestens ein Sensorelement vorgesehen ist, welches Informationen über eine Sitzbelegung gewinnt und diese Informationen an ein Steuergerät für die Vorrichtung übermittelt.

10. Sitz, insbesondere Sitz (14) für ein Kraftfahrzeug, mit mindestens einer Vorrichtung gemäß einem der Ansprüche 1 bis 9.

11. Verfahren zur Steuer- und /oder Regelung des Druckniveaus mindestens eines volumenvariablen Rezipienten (10,12) eines pneumatischen Systems, insbesondere eines pneumatischen Systems für einen Kraftfahrzeugsitz, **dadurch gekennzeichnet, dass** das Druckniveau in dem Rezipienten (10,12) durch Volumenänderungen in einem dem Rezipienten zugeordneten Volumenstellelement (24,26) variiert wird.

12. Verfahren nach Anspruch 11, **dadurch gekennzeichnet, dass** das in dem Rezipienten (10,12) vorliegende Druckniveau über die Stellung mindestens eines, dem Rezipienten (10,12) zugeordneten Volumenstellelementes (24,26) detektiert wird.

13. Verfahren nach Anspruch 11 oder 12, **dadurch gekennzeichnet, dass** das in dem Rezipienten (10,12) vorliegende Druckniveau über den Stellweg eines ein Stellelement (42,43) des Volumenstellelementes (24,26) stellenden Motors (40,41) detektiert wird.
